# EUROPEAN PATENT APPLICATION

(11) **EP 4 635 383 A2**
(43) Date of publication of application: **22.10.2025**
(21) Application number: 25200645.7
(22) Date of filing: 26.03.2021
(51) Int. Cl.: A47J 43/07

(54) **FOOD PROCESSING TOOL**

(30) Priority: 26.03.2020 GB 202004417
(62) Divisional of application: 21719542.9
(71) Applicant: De'Longhi Braun Household GmbH, 63263 Neu-Isenburg (DE)
(72) Inventor: KLEEMAN, Christof, 63263 Neu-Isenburg (DE); WOHLFAHRT, Pascal, 63263 Neu-Isenburg (DE); DEXHEIMER, Christian, 63263 Neu-Isenburg (DE)
(74) Representative: Mathys & Squire

(57) **Abstract**

There is provided a rotary blade assembly (100) for a food processing appliance, comprising: a hub (140) configured to rotate in use about axis of rotation, and a plurality of blades (110, 120, 130) extending away from said hub, wherein at least two angles about the axis of rotation separating the blades differ.

## Description

### Field

The present invention relates to a food processing tool, and more specifically to a bell for a food processing appliance such as a hand-blender, and a blade assembly for use with a food processing appliance.

### Background

The problem of suction is a well-known one in the field of food processing appliances, particularly that of suction created by vortex-formation during blending/pureeing of food/beverage material. Particularly in the field of hand-tools such as hand-blenders, where suction during processing can pull the hand-tool downwardly within the container in which food processing is taking place, this can result in discomfort to the user and inefficient processing as the tool is pulled towards the bottom of the container.

One solution proposed for addressing this is described in GB2469639A, the whole disclosure of which is hereby incorporated by reference. This provides a hand-blender having a bell (also known as a foodstuff processing head or housing) having a castellated (or crenelated) open end. A three-bladed blade is provided within the housing with blades that extend at different angles such that their tips follow different paths within the housing. The housing also has ribs that extend towards the blades. The combination of ribs, castellations, and differently-angled blades results in a degree of disruption of vortex-formation within the housing, thus reducing suction to an extent.

However, the hand-blender of GB2469639A suffers from a number of drawbacks. The most important of these for the purposes of this invention is that the power consumption created by the need to rotate three or more relatively large blades in close association with the bell/housing was excessive. Additionally, the construction tended to be noisy. Finally the problem of suction was not satisfactorily reduced.

Attempts at addressing the power-consumption issue by reducing the size of the housing resulted in it becoming hard for food to enter the housing to be processed. Similarly reducing the number of blades or shortening them had unsatisfactory results.

The present invention therefore aims to at least partially ameliorate the above-described problems of the prior art.

### Summary of the Invention

In a first aspect of the invention, there is disclosed a rotary blade assembly for a (food processing bell of a) food processing appliance (such as a hand blender) comprising three or more blades extending radially away from a (optionally central) hub. The three or more blades comprise at least one longer blade and two (optionally neighbouring) shorter blades shorter than the longer blade, wherein a first angle about the axis of rotation separating the two shorter blades is less than a second angle about the axis of rotation separating at least one of the shorter blades and the longer blade. A centre of gravity of the blade assembly is located substantially within the central hub. This may provide the advantage that a larger area is created between the shorter blades and the longer blade for food material to enter a rotational volume of the rotary blade assembly to be processed without excessive discomfort (when deployed in a hand-held tool) or vibrations (when deployed in a stand-alone appliance).

In a further aspect of the invention there is provided a rotary blade assembly for a food processing appliance, comprising: a hub configured to rotate in use about an axis of rotation, and a plurality of blades extending away from said hub, wherein at least two angles about the axis of rotation separating the blades differ. The plurality of blades are preferably arranged such that the assembly is balanced about the axis of rotation, more preferably such that a centre of gravity of the blade assembly is located substantially within the hub. The plurality of blades preferably comprise at least three blades, said at least three blades comprising at least one longer blade, and two shorter blades shorter than the longer blade. A first angle about the axis of rotation separating the two shorter blades is preferably less than a second angle about the axis of rotation separating at least one of the shorter blades and the longer blade (such the blade arrangement is asymmetric and/or has a "Y" shape in plan). Preferably, the first angle is between 90 and 120 degrees, more preferably between 100 and 110 degrees, and the second angle is between 110 and 180 degrees, more preferably 115 degrees and 140 degrees. Said angles about the axis of rotation are preferably the angles between the point of maximum extent away from the axis of rotation, Preferably, the point of maximum extent away from the axis of rotation of each blade is the tip of each blade.

Preferably, the shorter blades are between 1/15^{th} and 1/3^{th} shorter than the longer blade; more preferably between 1/12^{th} and 1/4^{th} shorter than the longer blade; still more preferably wherein the shorter blades are approximately 1/6^{th} shorter than the longer blade. This may provide an appropriate variation in length.

Optionally, a width/length ratio of the shorter blades is higher than of the longer blade, such that the centre of gravity of the blade assembly is at the axis of rotation. Also preferably, the width/length ratio of the longer blade is between 1.8 and 2.2, and more preferably is approximately 2 and the width/length ratios of the two shorter blades are between 2.3 and 2.9, and more preferably are approximately 2.5 and 2.7 respectively. This may balance the blade in a fashion that permits it to be made of material of uniform thickness without requiring additional parts such as weights.

Preferably, an odd number of blades are provided. The number of blades can potentially be exactly three. This may allow a good work-rate without making the blade assembly excessively heavy and expensive. Preferably, all of the blades are separated about the axis of the rotation (such that e.g. no blade is arranged directly above or below another blade)

Each of the blades may possibly extend at a differing angle from the axis of rotation and be configured to define a differing rotational volume during rotation. This may enlarge the rotational volume of the blade, increasing the amount of food processed. Additionally, the rotational volume defined by each blade can be separated from its neighbouring rotational volumes by between 5 and 20 degrees, preferably approximately 10 degrees, which may ensure a good scope of coverage with minimal gaps for food to go through unprocessed under typical operating conditions.

A cutting slope of each of the shorter blades may be on an opposite side of the blade assembly to a cutting slope of the longer blade. This may maximise the volume processed and can allow the blades to direct food towards each other.

A cutting slope of each of the three or more blades preferably extends at between 10 and 30 degrees to the direction of rotation, more preferably approximately 20 degrees to the direction of rotation. This may provide a good combination of sharpness and strength.

Each of the blades may include a curved cutting edge, preferably having a curved leading edge. Each of the at least three blades can comprise a cutting edge comprising a leading edge section and a tip section. Preferably the leading edge section has a substantially continuous radius of curvature as this may allow a "pulling cut". The tip section may also have a radius of curvature that increases towards a radial extremity thereof as this may enhance cutting of food around the periphery of the blade assembly's rotational volume.

In a different aspect of the invention, a food processing bell is disclosed comprising the above-discussed blade assembly.

In a further aspect, a food processing bell is provided, preferably including a metal inlay, more preferably wherein the bell comprises crenellations and/or wherein the metal inlay is laser welded to an outer part of the bell. This may allow the bell to be dishwasher-safe.

The food processing bell can comprise a housing with a food processing surface nested therein. The food processing surface may comprise a substantially radially-extending floor and an axially-extending wall extending peripherally from the floor so as to radially surround the blade assembly. This defines a volume within which food processing may take place and may protect the blade assembly against undesired contact. The wall can have axially-extending ribs formed extending radially inward therefrom towards the blade assembly. These ribs may serve to disrupt vortexes, prevent food co-rotating with the blade assembly, and may create "pinch-points" when the food being processed is trapped between the blades and the ribs. The wall preferably extends at an angle of 30-45 degrees to the axis of rotation of the blade assembly (i.e. to a central axis of the housing) as this angle has been shown experimentally to promote good flow of material towards the blades and avoids creating food-traps. The housing also preferably has a chamfer formed at a peripheral edge thereof so that large pieces of food can be crushed against the bell and funnelled towards the blade assembly.

Optionally, the housing can comprise axially-extending crenellations located to coincide axially with the ribs. The crenellations can be separated by lands located to coincide axially (i.e., essentially "line up with") with recesses extending between the ribs of the food processing surface. This may promote a good flow of material over the lands and towards the blades and ribs.

Potentially the ribs can extend from the wall by a distance that varies along their axial extent, for creating pinch-points with blades of differing lengths. Preferably the pinch-points have a width in the range 0.5-5mm, and more preferably 1-3mm, and more preferably still of approximately 2mm. These distances may create close co-operation between the blades and the ribs whilst allowing sufficient distance to prevent accidental collisions.

The ribs can form an overhang shaped and configured to surround one of the blades on at least two sides, and preferably on at least three sides, during rotation of the blade assembly within the bell. This may enhance the pinch-point effect.

The side-wall of each rib extending from the wall forms an angle of approximately 100-160 degrees, and preferably 118 degrees, to an imaginary line extending at a right angle from an imaginary line extending from the axis of rotation. This may help guide food rotating around the periphery of the interior of the bell towards the blade assembly for processing.

The blade assembly is optionally mounted on a drive shaft extending to substantially the centre, axial and/or radial, of a volume co-operatively defined by the wall and the floor, and preferably extends to a point 10-15mm axially away from the floor within the volume.

This may ensure good processing within the volume.

The bell may also comprise a tubular element shaped and configured to substantially surround the drive shaft along that part of its length within the volume. This may protect the drive-shaft.

In another aspect of the invention a food processing appliance comprising the food processor bell discussed above is disclosed. The food processor bell may be configured to be removably attachable to a motor unit of the food processing appliance.

In a further aspect of the invention, a kit of parts is disclosed comprising the bell discussed above, a motor unit, and an attachment formation configured to permit removable attachment of the bell to the motor unit is also disclosed. Preferably the attachment formation is provided on the motor unit and/or housing.

In an additional aspect of the invention, a method of manufacturing a blade assembly is disclosed comprising steps of:
a) providing a sheet of metal material, and
b) cutting or punching a blade assembly having three blades from the sheet, one of the blades being longer than the other two,
wherein, during the step of cutting or punching, a width/length ratio of the blades is varied to balance them at a predetermined centre of rotation of the blade assembly. This varying of the width/length ratio from one blade to another provides a simple way of manufacturing a balanced, asymmetric blade.

In another aspect of the invention, a method of manufacturing a hand-blender bell is disclosed comprising steps of:
x) providing a metal housing having an opening defined by a crenelated skirt,
y) locating a metal element having a processing surface within the opening with the processing surface facing towards the opening, with a meeting-point between the metal element and the metal housing entirely accessible in a straight line from outside the housing,
z) welding (preferably laser-welding) the housing and the processing surface together at the meeting point to form a liquid-tight seal.

This may provide a monolithic hand-blender bell that is sealed against food ingress.

A hand-blender having a three-bladed rotary knife assembly, wherein one of the blades is longer than the others, is also disclosed.

A hand-blender is disclosed having a bladed rotary knife, the blades extending from a central hub, where one of the blades is longer than the others, and the blade assembly is balanced such that the centre of gravity is within the hub, is also disclosed.

A hand-blender having a monolithic, crenelated bell sealed against liquid ingress, with ribs extending from a peripheral wall of the bell towards a blade assembly located on a drive-shaft sealingly extending through the bell, is also disclosed.

The invention extends to a blade assembly substantially as described herein with reference to the drawings.

The invention also encompasses a kit of parts for constructing any of the apparatuses or apparatus elements herein described.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

As used herein, the term "bell" preferably connotes a formation of a hand blender which is shaped to contain the cutting blades, preferably having an open portion to allow food items to enter the bell and/or having a shape approximating that of a conventional bell.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances, and any reference to "food" herein may be replaced by such working mediums.

The invention described here may be used in any kitchen appliance and/or as a stand-alone device. This includes any domestic food-processing and/or preparation machine, including both top-driven machines (*e.g.* stand-mixers) and bottom-driven machines (*e.g.* blenders). It may be implemented in heated and/or cooled machines. It may be used in a machine that is built-in to a work-top or work surface, or in a stand-alone device. The invention can also be provided as a stand-alone device.

### Brief Description of Drawings

One or more aspects will now be described, by way of example only and with reference to the accompanying drawings having like-reference numerals, in which:
Fig. 1a is a bottom-up, schematic see-through view of a blade assembly according to a first embodiment of the invention;
Fig. 1b is a bottom-up, schematic see-through view of the blade assembly of Fig. 1a with various cutting angles highlighted;
Fig. 1c is a bottom-up, plan view showing the opposite side of the blade assembly of Fig. 1a;
Fig. 1d is a top-down plan diagram of the blade assembly of Fig. 1a depicting the length of the blades;
Fig. 1e is an isometric, perspective drawing of the blade assembly of Fig. 1a;
Fig. 1f is a side-on drawing of the blade assembly of Fig. 1a from a first view-point;
Fig. 1g is a side-on drawing of the blade assembly of Fig. 1a from a second view point;
Fig. 2a is a perspective drawing of a food processing tool according to a second embodiment of the invention, with the blade assembly of Fig. 1a attached;
Fig. 2b is a side-on, cut-away drawing of the food processing tool of Fig. 2a;
Fig. 2c is a bottom-up view of the food processing tool of Fig. 2a with the blade assembly omitted;
Fig. 2d is a perspective view of the food processing tool of Fig. 2c;
Fig. 2e shows a side-on, sectional view of the food processing tool of Fig. 2c through the line A-A;
Fig. 2f shows a side-on, sectional view of the food processing tool of Fig. 2c through the line B-B, and
Fig. 3 shows a side-on, schematic drawing of a food processing appliance according to a third embodiment of the invention.

### Specific Description

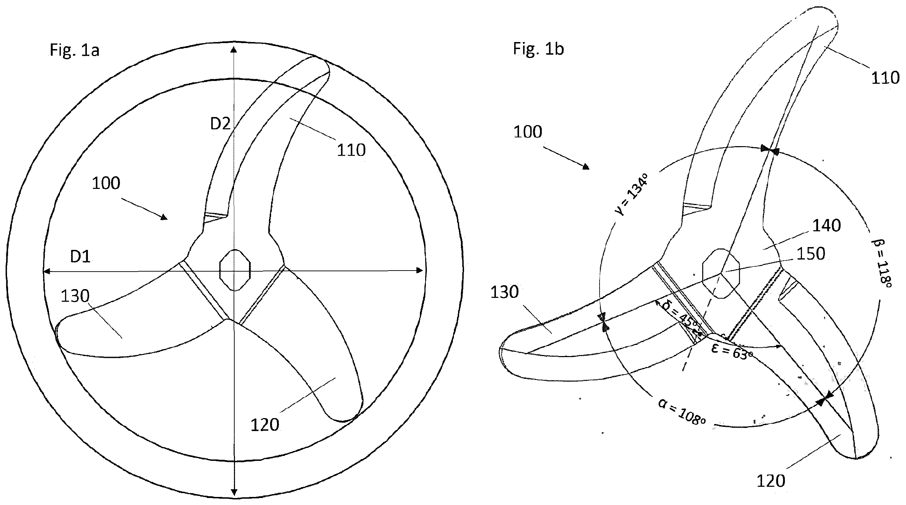

Figs. 1a-1g depict a blade assembly 100 according to a first embodiment of the invention. The blade assembly 100 has three blades (or wings) 110, 120, and 130 extending from a central hub 140 within which an attachment aperture 150 is defined. The blade assembly 100 can be attached to a drive shaft via the attachment aperture 150 so that it can be driven to rotate to achieve blending, cutting, mincing, shredding, mixing, and other food processing activities. To facilitate being driven, the aperture 150 is non-circularly shaped - for example it has flat sections.

As is best seen in Fig. 1a, the blades 110, 120, and 130 consist of two radially-shorter blades 120 and 130 and one radially-longer blade 110. Preferably, the shorter blades 120 and 130 are approximately 1/6^{th} shorter than the longer blade 110 as this has been seen to deliver good results in testing. For example, a circle about the centre of rotation of the blade assembly 100 passing through the point of maximum radial extent away from the central axis of rotation of the blade assembly 100 for the shorter blades 120 and 130, may have a diameter (D1) of 46.5mm whilst the diameter of the corresponding circle for the longer blade 110 may be 55.5mm. As will be discussed in further detail later, the blade assembly 100 is balanced such that its centre of gravity is within the central hub 140, and more preferably within the attachment aperture 150, and more preferably still is at the central axis of rotation of the blade assembly 100.

The above-discussed differences in radial extent (or extent away from the hub 140 in any direction) allow some of the blades 110, 120, and 130 to interact with features within the appliance in which they are deployed, such as ribs or castellations, whilst others do not or do so to a lesser extent. This means that the blade assembly 100 can enjoy the advantage of having multiple blades whilst avoiding the power consumption and noise that might result from having all the blades 110, 120, and 130 interact with features within the appliance in which the blade assembly 100 is deployed in the same way if they were of the same length. Variation in length also allows for more, and larger pieces of food to enter into the processing region within which the blade assembly 100 rotates. The power required at the beginning of food processing is also reduced as less work needs to be done by the blade assembly 100 on initial start-up.

As is best seen in Fig. 1b, lines drawn from the central axis (i.e., the axis of rotation of the blade assembly 100) to the point of maximum extent away from the central axis for each of the blades 110, 120, and 130 are separated by differing angles α, β, and γ, giving the blade an appearance similar to the letter "Y". In other words, at least two angles about the axis of rotation separating the blades differ. Preferably the two neighbouring shorter blades 120 and 130 are separated by a smaller angle (α) than that which respectively separates them from the longer blade 110 (β and γ). In this example the angle separating the shorter blades 120 and 130 (α) is 108 degrees and that separating the shorter blades 120 and 130 from the longer blade 110 (β and γ) is 118 degrees and 134 degrees respectively.

Due to the balancing of the blade, the angles δ and ε formed respectively between the shorter blades 120 and 130 and a line extending between them through the centre of rotation of the blade assembly from the tip of the longest blade 110 are different. For example the angle δ between the blade 130 and the above-discussed line coming from the tip of the blade 110 can be 45 degrees, whilst the angle ε between the blade 120 and the line can be 63 degrees.

When deployed in an appliance having regularly, symmetrically-arranged features (i.e., ribs or crenellations) this asymmetric arrangement helps balance the blade and prevents each blade 110, 120, and 130 passing and interacting with such a feature at the same time, thus reducing noise and peak power consumption. The variation in angles also permits more food, and larger pieces of food to enter through the wider gap between the longer blade 110 and the shorter blades 120 and 130 than would be the case if they were evenly separated.

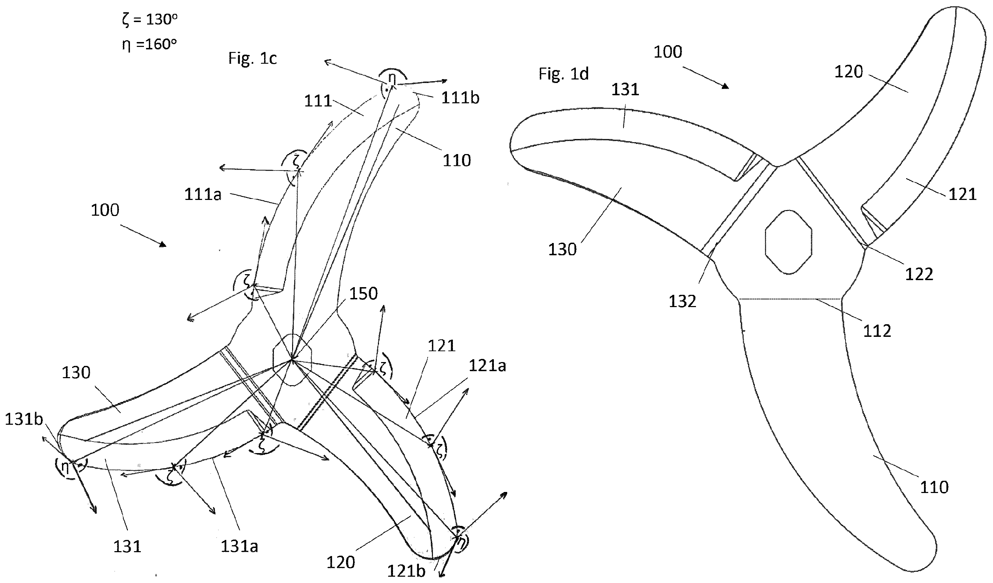

As shown in Fig. 1c, each of the blades 110, 120, and 130 has a respective cutting-edge 111, 121, and 131 facing towards an intended direction of rotation of the blade-assembly 100 (in this case anti-clockwise as seen in Fig. 1b). The cutting-edges 111, 121, and 131 are each curved away from the direction of rotation going from the centre to the tip of the blade. The trailing edge (i.e., edge facing away from the intended direction of rotation) of each blade 110, 120, and 130 may also be similarly curved.

Each cutting edge 111, 121, 131, consists of two components - a leading edge 111a, 121a, 131a, and a tip section 111b, 121b, 131b. A radius of curvature of each leading edge 111a, 121a, 131a (that is, the radius of a circle that completes the arc described by each leading edge) is substantially equal and constant over the whole length of the leading edges 111a, 121a, 131a. For example, it may be approximately 28.35mm. This results in the angle ζ between the tangent from any point on the leading edges 111a, 121a, and 131a, and the motion vector of that point when the blade assembly 100 is being rotated as intended, being substantially equal. The motion vector is defined as being a line in the direction of rotation formed at a right-angle to a line connecting that point on the leading edge 111a, 121a, and 131a to the central axis of rotation. For example, the angle ζ may be 130 degrees, an angle that has been shown in experimentation to deliver good cutting results.

In contrast, at the start of each of the tip sections 111b, 121b, and 131b, where they meet their respective leading edges 111a, 121a, and 131a, the angle η between a tangent of the tip section 111b, 121b, 131b and the motion vector at that point on the tip section 111b, 121b, and 131b is greater than the angle ζ. For example the angle η may be 160 degrees, an angle that in experimentation appears to deliver satisfactory results. Furthermore, the angle η may increase towards the most point of the tip 111b, 121b, and 131b furthest from the axis of rotation of the blade assembly 100.

The angle formed by the leading edges 111a, 121a, and 131a, away from the direction of rotation establishes an even slicing effect where the blade is pulled through the material being processed (a so-called "pulling cut"). This promotes even, low-energy slicing of the material, with the blades travelling through the material being processed, rather than crushing of it. As such peak energy requirements are reduced. The tip sections 111b, 121b, and 131b of the cutting edges 111, 121, 131 ensure that material caught between the blades 110, 120, and 130 and the housing of the food processing device in which the blade assembly 100 is deployed will be cut rather than smashed or become jammed, and that food colliding with the periphery of the blade assembly 100 is still processed.

In order to reduce vibrations, the blade assembly 100 should be balanced such that it has a centre of gravity at the axis of rotation. This is achieved by varying a width/length ratio of each of the blades 110, 120, 130. As shown in Fig. 1d, each of the blades 110, 120, 130, has a respective root 112, 122, 132 at which it attaches to the hub 140 (which is roughly symmetrical about the central axis of rotation). By measuring the area of each blade 110, 120, 130 radially outwards from their respective roots, and then dividing each area by the length of the respective blade measured from the central axis of rotation of the blade assembly 100 to the tip of the blade 110, 120, 130, it is possible to calculate an effective width (W_{Eff}) of each blade. By dividing W_{Eff} by the length of the blade 110, 120, 130 it is possible to calculate a Width/Length ratio for each one.

In order to balance the blade assembly 100 preferably the shorter blades 120 and 130 each have a width/length ration higher than that of the longer/blade 110. For example the width/length ratio of the longer blade 110 may be approximately 2.0 (for example 0.195), whilst that of the shorter blade 120 may be approximately 0.27 (e.g., 0.269), and that of shorter blade 130 may be approximately 0.25 (e.g., 0.251).

Other ways of balancing the blade assembly 100 exist, for example it can be achieved by varying a density of the material of each blade 110, 120, and 130, and or/that of the hub 140, or by adding weights to them. However, balancing by varying the width/length ratio of the blades 110, 120, and 130 is advantageous as it allows the blade assembly 100 to be formed as a monolithic single piece, and to be manufactured by stamping, lasing, grinding, cutting, moulding etc. from a single work-piece/material, thus simplifying manufacturing. Similarly, whilst balancing could be achieved by varying a vertical (or axial) thickness of the blades 110, 120, 130, this would potentially make it difficult to stamp/cut the blade assembly from a single sheet of metal of continuous thickness. Having the blades 110, 120, and 130 all emanate from the same planar hub 140 is also desirable as it facilitates this single-piece construction, and means that the centrifugal force of the blades 110, 120, 130 acts on the drive shaft to which the blade assembly is attached at the same axial location.

As shown in Fig. 1d, the cutting edge 111 of the longer blade 110 is made on a different axial side of the blade assembly 100 to the cutting edges 121 and 131 of the shorter blades 120 and 130, with the cutting slope of the longer blade 110 facing axially towards the shorter blades 120 and 130, and vice-versa. This means that the cutting edge 111 of the larger blade acts to move material into the path of the cutting-edges of the shorter blades 121 and 131 and vice-versa. Additionally, it maximises a processing volume of the blade assembly 100, as the width of the blades 110, 120, and 130 is also added to this volume. Each cutting edge 111, 121, 131 is formed as a slope preferably at roughly 20 degrees to the direction of rotation, such that food strikes the blade at the vertex dividing the two surfaces separated by 20 degrees, one of the surfaces being substantially parallel to the direction of rotation, and the food is then divided into at least two segments, one of which is pushed axially by the inclined surface. A 20 degree cutting slope delivers a good combination of blade sharpness (for which a thin angle is desirable) and blade-strength (for which a thick angle is desirable).

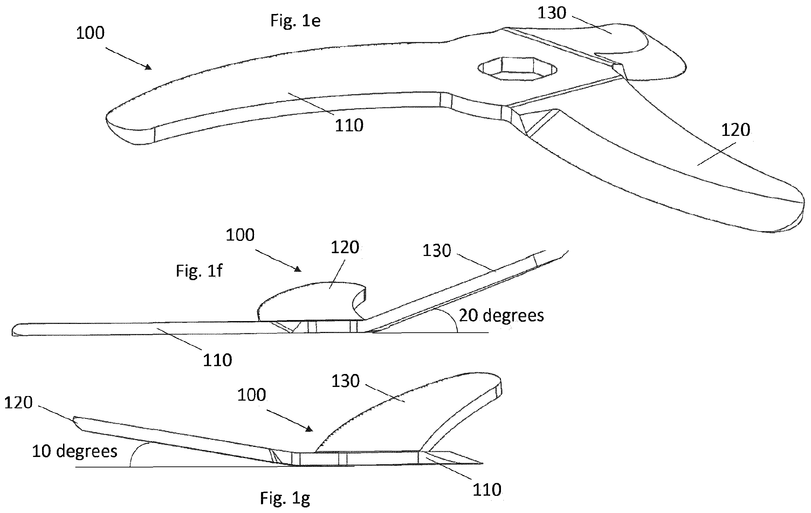

As seen in Fig. 1e, the blades 110, 120, 130 extend at differing angles to the horizontal. This facilitates a greater volume being swept through by the blade assembly 100 with each rotation. In one potential configuration, the longer blade 110 extends horizontally (i.e., at a right-angle to the axis of rotation), whilst, as shown in Fig. 1f, the shorter blade 120 extends at 20 degrees to the horizontal. Meanwhile the other shorter blade 130 extends at 10 degrees to the horizontal as seen in Fig. 1g. By fanning out with an approximate 10 degree separation, the blades 110, 120, 130 create a good rotational volume of coverage with each rotation, without leaving large gaps through which material could travel unprocessed at typical operating speeds (e.g., 200-20,000 RPM or more, and more preferably in the range 3,500 to 15,000 RPM) for a typically-sized blade (i.e., having a rotational volume 40 to 60mm in diameter measured about the axis of rotation).

Whilst a three-bladed blade assembly 100 has been described above, the blade assembly could include a different number of blades. For example it could include a number greater than three. The number of shorter blades 120 and 130 may be increased whilst still having only one longer blade 110

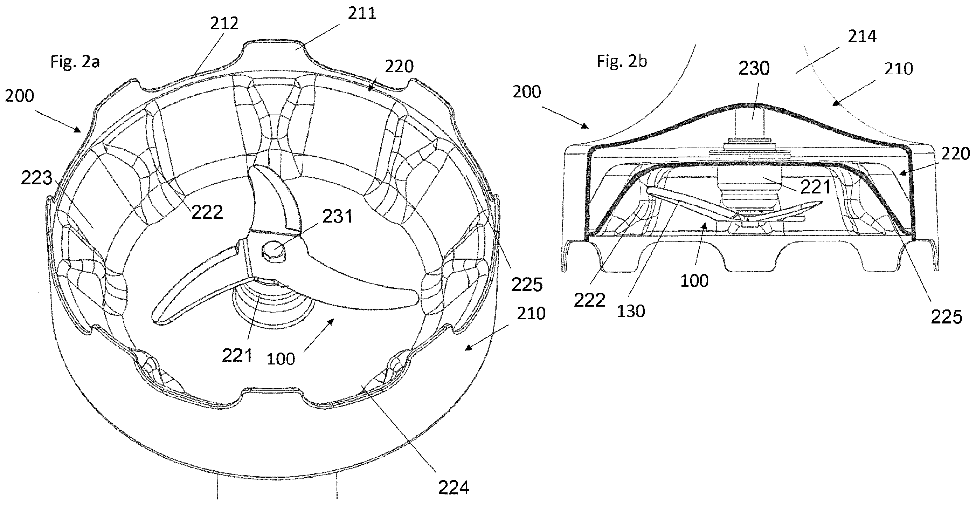

Figures 2a-2f depict a hand-blender bell 200 according to a second embodiment of the invention. As shown in Figure 2a the bell 200 can be used in combination with the blade assembly 100.

As can be seen in Figs 2a-2c, the hand-blender bell 200 consists of an external housing 210, an internal processing surface 220 nested within the housing 210, and a drive shaft 230 extending through a shaft-alley 214 within the housing 210 and emerging through a central tubular element 221.

As best shown in Fig. 2a, a blade assembly (here the blade assembly 100 discussed above) can be attached to the drive shaft 230 using the attachment formation 231 at the extreme end of the drive shaft 230. The attachment formation 231 may be a non-circular-cross-sectioned part of the drive shaft 231 shaped to be received in the correspondingly-shaped aperture 150. Alternatively, the blade assembly 100 may be attached to the shaft 230 by matching threads, a screw-attachment, or by other removable-attachment means, or the blade-assembly 100 may be integrally-formed with the shaft 230.

The housing 210 has an open end with a skirt on which crenellations 211 are formed separated by intervening lands 212. Whilst these are shown as being square-shaped, they may be another shape, such as zig-zag, sine-wave, saw-tooth, or another shape. They may also be omitted to give the bell 200 a flat/horizontal skirt. However, it is preferable to include crenellations 211 as these maintain clear passages through which material can travel, around the lands 212, to be processed by the blade assembly 100, and prevent the bell 200 becoming sealed against a surface (i.e., the bottom of a container in which processing is taking place) such that no food can be processed.

The crenellations 211 also function to prevent excessive suction building up between the blade assembly 100 and a container in which the bell 200 is being used by holding the blade assembly 100 a predefined distance away from the container. For this purpose the crenellations should extend roughly 10-15mm axially away or "above" the blade assembly, and preferably 11-12mm.

With the housing 210, a processing surface 220 is provided. The processing surface 220 comprises a relatively flat (or at least only downwardly curving slightly) floor 224, from which a relatively inclined wall 225 extends peripherally. The relatively inclined wall 225 has inwardly-extending ribs 222 extending therefrom. The ribs 222 preferably extend axially along the wall 225, with the ribs 222 being separated from each other by recesses 223.

The ribs 222 serve a number of purposes. They serve to direct food circulating within the bell 200 towards the blade assembly 100 for processing. Additionally, they create narrower "pinch-points" between the ribs 222 and the blades of the blade assembly 100 where the distance of separation of the ribs 222 and one or more of the blades 110, 120, 130 reaches a minimum, where food can be trapped between the blades 110, 120, 130 and the ribs 222 and processed. Furthermore, they serve to disrupt the formation of a vortex within the bell 200 and thus reduce unpleasant downward suction. Finally, the ribs 222 prevent food simply co-rotating with the blade assembly 100 and not being cut.

The separation of the blades 110, 120, 130 and the ribs 222 at the "pinch-points" (i.e., minimum distances) may be 0.5-5 mm or more preferably 1-3mm, and more preferably still approximately 2mm. These distance ranges are advantageous as they minimise the distance between the ribs 222 and the blades 110, 120, 130 whilst still allowing a sufficient tolerance to avoid collision between the blade assembly 100 and the ribs 222.

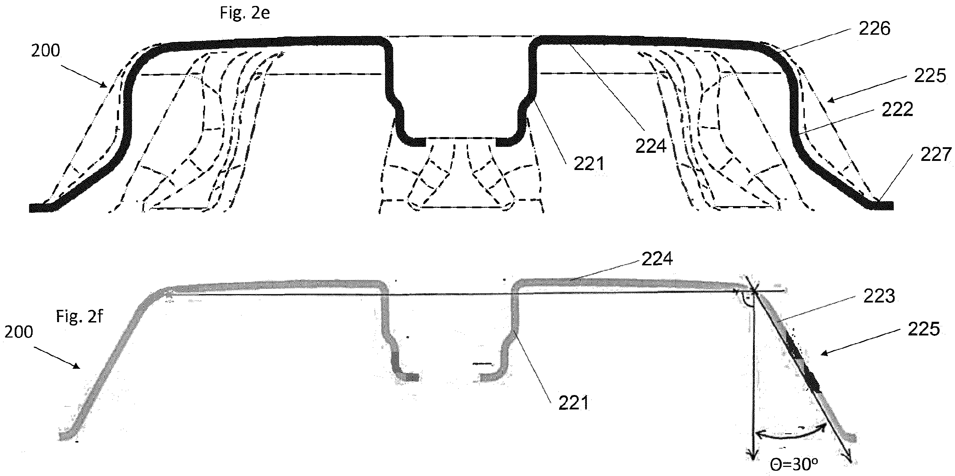

This effect is further enhanced by arranging the ribs 222 and the crenellations 211 to coincide axially, such that the crenellations 211 extend from the point of the housing 210 extending axially away from the ribs 222, whilst the recesses 223 similarly coincide with the lands 212. With this arrangement, material may flow between the crenellations 211, over the lands 212, and then down towards the floor 224 of the processing surface 220 along the recesses 223 relatively unobstructed, prior to being processed between the blade assembly 100 and the ribs 222. Arranging the crenellations 211 and the ribs 222 symmetrically further increases the balance of the processing bell 200, enhancing even processing. As shown in Fig. 2f (a section taken through the food processing surface 220 along the line B-B through the recesses 223), forming the recesses 223 at an angle θ to the axis of rotation of approximately 30-45 degrees further enhances this flow by providing an appropriate slope. The transition between the wall 225 and the floor 224 is preferably a non-right-angle, and more preferably a curved transition surface 226 is formed inter-connecting the wall 225 and floor 224 to further promote flow from one to the other and avoid the trapping of food.

As shown in Fig. 2b, the housing 210 and the processing surface 220 may be integrally formed. For example, the processing surface 220 may be welded, preferably laser-welded to the housing 210, with both being formed from a metal such as, for example, stainless steel. Welding has the effect of melting the metals of the housing 210 and processing surface 220 and fusing them into a monolithic unit. This simplifies manufacturing and creates a more durable, rigid, sealed construction that is easily cleanable. To further facilitate laser-welding of the processing surface 220 to the housing 210, processing surface 220 and housing 210 should be shaped and dimensioned such that the join between them when the processing surface 220 is located within the housing 210 is exposed in a direct, straight line (i.e., the line a laser would follow) axially towards the opening of the housing 210. Thus, the crenellations 211 and/or ribs 222 should preferably not cover this join. Alternatively the processing surface 220 may be an insert that is fixed inside the housing 210 with, e.g., glue, or other joining means may be used (e.g., soldering, brazing, screwing, riveting, clipped or bolted retention).

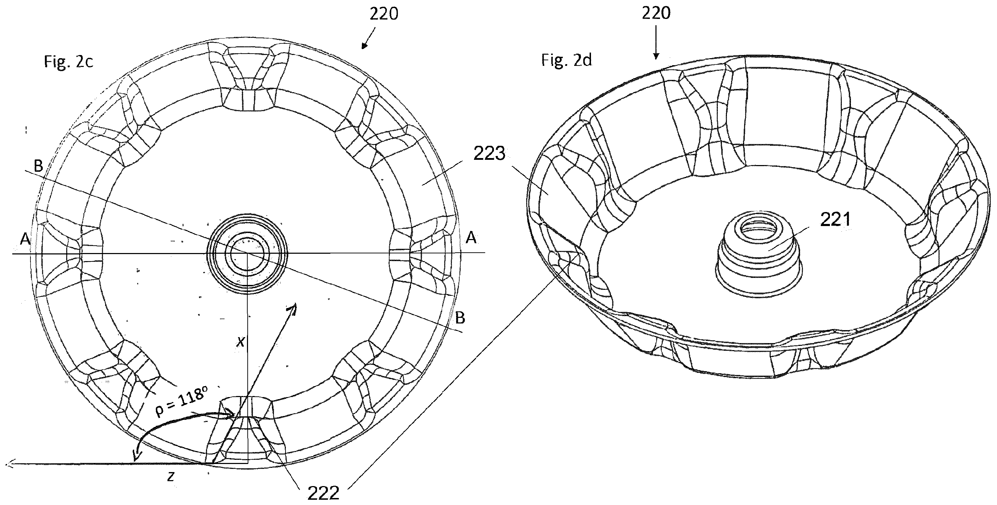

As shown in Fig. 2c, these effects are enhanced by the angle ρ formed by the ribs to an imaginary line z extending at a right-angle to a line x extending radially from the axle 230 to the centre of the rib 222. The angle ρ is preferably approximately 100-160 degrees, and more preferably around 118 degrees as this angle has been shown to deliver satisfactory results.

As best seen in Fig. 2d, the tubular element 221 is a hollow tubular extension extending axially from the floor 224 into the volume defined by the wall 225 and floor 224, towards the opening of the housing 210. The tubular element 221 serves to protect the rotating drive-shaft 230 from collisions helping to prevent bending. It also serves as a sealed bearing for the drive shaft 230, preventing food material from entering into the shaft-alley 214, and may include suitable sealing means (e.g., washers, o-rings, gaskets) and lubricant. The tubular element 221 also serves to direct food moving radially inwards along the floor 224 upwards towards the blade assembly 100, and locates the blade assembly substantially centrally within the volume of the bell 200 defined by the wall 225 and floor 224, both axially and radially. The tubular element is preferably between 10-15mm long to ensure that sufficient processing space is maintained between the blade assembly 100 and the floor 224.

Alternatively, lubricant may be omitted from the tubular element 221 to better allow the washing of the assembly in a dish-washer.

As shown in Figs 2b and 2e (2e being a section taken across the food processing surface 220 along the line A-A through the ribs 222), the ribs 222 may extend inwards, away from the wall 225 by a distance that varies along the length of the rib 222 to create an over-hang. The ribs 222 may vary their extension away from the wall possibly just slightly, for example by less than 10%, or even less than 5% of the average extension from the wall, to avoid creating deep food traps, and any overhang is preferably formed by curved edges. The blades of the blade assembly 100, for example the shorter blade 130, may sweep beneath this over-hang of the ribs 222. This enhances the pinch-point effect of the ribs 222 as the material being processed between the ribs 22 and the blade 130 is surrounded by the ribs 222 on at least two sides (i.e., radially outboard from the blade, and axially towards the opening of the bell 200) and potentially on three (i.e., radially outboard, and axially both "up" towards the opening of the bell 200 and "down" towards the floor 224). This varied extension of the ribs 222 also allows them to potentially create pinch-points with blades of varying length rather than just one of them.

The wall 225 preferably forms a chamfer towards the opening of the housing 210 extending both radially and axially away from the centre of the bell 200. This permits larger pieces of food (e.g., potato) to enter into the bell 200 by being, e.g., squashed against the bell 200.

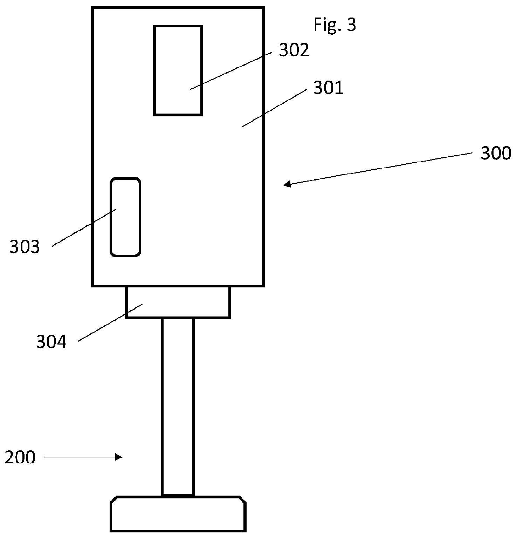

Fig. 3 shows a third embodiment of the invention in which the bell 200, including a blade assembly such as the blade assembly 100, is connected to a motor-unit 300. The motor unit 300 includes a motor assembly 301, with a control switch 302 provided for controlling the motor activation and speed. A user interface 303, visual, tactile, or auditory, may be provided on the motor-unit 300 for giving feedback to the user about motor unit performance. The bell 200 may be joined to the motor unit 300 by an attachment formation 304 provided with suitable clips or other means for releasable attachment. The attachment formation 304 may be provided on the motor housing 300, on the bell 200, or on both, or may be provided as a separate element. Alternatively the bell 200 may be integrally formed with the motor housing 300 in which case an attachment formation is not needed.

Blade assembly 100 is preferably formed of a food-safe, dishwasher-safe, durable metal material such as stainless steel. Similarly the bell 200 should also be made of a food-safe, dishwasher-safe material, such as stainless steel or alternatively a suitable BPA-free plastic.

Appliance 300 is depicted as a hand-blender, but the blade assembly 100 and/or bell 200 may be deployed in other appliances. For example, the blade assembly 100 may be deployed in a jug blender. In another example, the bell 200 may be provided as an attachment for a hand-mixer or stand mixer.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

The invention is also defined in the following clauses:
1. A rotary blade assembly for a food processing appliance, comprising:
   a hub configured to rotate in use about an axis of rotation, and
   a plurality of blades extending away from said hub, wherein at least two angles about the axis of rotation separating the blades differ.
2. A rotary blade assembly according to clause 1, wherein the plurality of blades are arranged such that the assembly is balanced about the axis of rotation, preferably such that a centre of gravity of the blade assembly is located substantially within the hub.
3. A rotary blade assembly according to clause 1 or 2, wherein the plurality of blades comprise at least three blades, said at least three blades comprising at least one longer blade, and two shorter blades shorter than the longer blade.
4. A rotary blade assembly according to clause 3, wherein a first angle about the axis of rotation separating the two shorter blades is less than a second angle about the axis of rotation separating at least one of the shorter blades and the longer blade; preferably wherein the first angle is between 100 and 110 degrees and the second angle is between 115 degrees and 140 degrees.
5. The blade assembly of clause 3 or 4, wherein the shorter blades are between 1/15^{th} and 1/3^{th} shorter than the longer blade; preferably between 1/12^{th} and 1/4^{th} shorter than the longer blade; more preferably wherein the shorter blades are approximately 1/6^{th} shorter than the longer blade.
6. The blade assembly of any of clauses 3 to 5, wherein a width/length ratio of the shorter blades is higher than of the longer blade, such that the centre of gravity of the blade assembly is at the axis of rotation.
7. The blade assembly of clause 6, wherein the width/length ratio of the longer blade is between 1.8 and 2.2, and preferably is approximately 2, and the width/length ratios of the two shorter blades are between 2.3 and 2.9, and preferably are approximately 2.5 and 2.7 respectively.
8. The blade assembly of any preceding clause, wherein the number of blades 1s exactly three.
9. The blade assembly of any preceding clause, wherein each of the blades extends at a differing angle from the axis of rotation and is configured to define a differing rotational volume during rotation; preferably wherein the rotational volume defined by each blade is separated from its neighbouring rotational volumes between 5 and 20 degrees, more preferably by approximately 10 degrees.
10. The blade assembly of any preceding clause when dependent on clause 3, wherein a cutting slope of each of the shorter blades is on an opposite side of the blade assembly to a cutting slope of the longer blade..
11. The blade assembly of any preceding clause, wherein a cutting slope of each of the three or more blades extends at between 10 and 30 degrees to the direction of rotation, preferably approximately 20 degrees to the direction of rotation, more preferably wherein one surface of the blade is parallel to the direction of rotation. .
12. The blade assembly of any preceding clause wherein each of the at least three blades comprises a cutting edge comprising a leading edge section and a tip section, preferably wherein the leading edge section has a substantially continuous radius of curvature; and/or wherein the tip section has a radius of curvature that increases towards a radial extremity thereof.
13. A food processing bell comprising the blade assembly of any preceding clause.
14. The food processing bell of clause 13, further comprising a housing with a food processing surface nested therein, the food processing surface comprising a substantially radially-extending floor and an axially-extending wall extending peripherally from the floor so as to radially surround the blade assembly, the wall having axially-extending ribs formed extending radially inward therefrom towards the blade assembly, wherein the wall preferably extends at an angle of 30-45 degrees to the axis of rotation of the blade assembly, and also the housing or the food processing surface preferably has a chamfer formed at a peripheral edge thereof.
15. The food processing bell of clause 14, wherein the housing comprises axially-extending crenellations located to coincide axially with the ribs, the crenellations being separated by lands located to coincide axially with recesses extending between the ribs of the food processing surface.
16. The food processing bell of clause 15, wherein the recesses extend at approximately 30-45 degrees to a central axis of the housing, and more preferably 30 degrees.
17. The food processing bell of any one of clauses 14-16, wherein the ribs extend from the wall by a distance that varies along their axial extent, for creating pinch-points with blades of differing lengths, preferably wherein the pinch-points have a width in the range 0.5-5mm, and more preferably 1-3mm, and more preferably still of approximately 2mm.
18. The food processing bell of clause 17, wherein the ribs form an overhang shaped and configured to surround one of the blades on at least two sides, and preferably on at least three sides, during rotation of the blade assembly within the bell.
19. The food processing bell of any one of clauses 14-18, wherein a side-wall of each rib extending from the wall forms an angle of approximately 100-160 degrees, and preferably 118 degrees, to an imaginary line extending at a right angle from an imaginary line extending from the axis of rotation.
20. The food processor bell of any one of clauses 14-19, wherein the blade assembly is mounted on a drive shaft extending to substantially the centre, axial and/or radial, of a volume co-operatively defined by the wall and the floor, and preferably extends to a point 10-15mm axially away from the floor within the volume.
21. The food processor bell of clause 20, further comprising a tubular element shaped and configured to substantially surround the drive shaft along that part of its length within the volume.
22. A food processing appliance comprising the food processor bell of any one of clauses 13-21, preferably wherein the food processor bell is configured to be removably attachable to a motor unit of the food processing appliance.
23. A kit of parts comprising:
   - the bell of any one of clauses 13-21,
   - a motor unit,
   - an attachment formation configured to permit removable attachment of the bell to the motor unit, preferably wherein the attachment formation is provided on the motor unit and/or housing.
24. A method of manufacturing a blade assembly comprising steps of:
   a) providing a sheet of metal material, and
   b) cutting or punching a blade assembly having three blades from the sheet, one of the blades being longer than the other two,
   wherein, during the step of cutting or punching, a width/length ratio of the blades is varied to balance them at a predetermined centre of rotation of the blade assembly.
25. A method of manufacturing a hand-blender bell comprising steps of:
   x) providing a metal housing having an opening defined by a crenelated skirt,
   y) locating a metal element having a processing surface within the opening with the processing surface facing towards the opening, with a meeting-point between the metal element and the metal housing entirely accessible in a straight line from outside the housing,
   z) welding (preferably laser-welding) the housing and the processing surface together at the meeting point to create a liquid-tight seal.

## Claims

1. A method of manufacturing a hand-blender bell comprising steps of:
a) providing a metal housing having an opening defined by a crenelated skirt,
b) locating a metal element having a processing surface within the opening with the processing surface facing towards the opening, with a meeting-point between the metal element and the metal housing entirely accessible in a straight line from outside the housing,
c) welding (preferably laser-welding) the housing and the processing surface together at the meeting point to create a liquid-tight seal.

2. A method as claimed in claim 1, wherein the housing and the metal element form a monolithic unit that is sealed against food ingress.

3. A method as claimed in claim 1 or 2, wherein the housing comprises a bell and the processing surface comprises a flat floor.

4. A method as claimed in any preceding claim, wherein at least one of the metal housing and the metal element comprise stainless steel.

5. A method as claimed in any preceding claim, wherein the bell is configured to be removably attachable to a motor unit of a food processing appliance.

6. A method as claimed in any preceding claim, wherein the housing or the food processing surface has a chamfer formed at a peripheral edge thereof.

7. A method as claimed in any preceding claim, in which the food processing surface comprising a substantially radially-extending floor and an axially-extending wall extending peripherally from the floor.

8. A method as claimed in claim 7, the wall having axially-extending ribs formed extending radially inward therefrom.

9. A method as claimed in claim 8, wherein the housing comprises axially-extending crenellations located to coincide axially with the ribs, the crenellations being separated by lands located to coincide axially with recesses extending between the ribs of the food processing surface.

10. A method as claimed in claim 9, wherein the recesses extend at approximately 30-45 degrees to a central axis of the housing, and more preferably 30 degrees, and/or wherein the ribs extend from the wall by a distance that varies along their axial extent, and/or wherein a side-wall of each rib extending from the wall forms an angle of approximately 100-160 degrees, and preferably 118 degrees, to an imaginary line extending at a right angle from an imaginary line extending from the axis of rotation.

11. A method as claimed in any one of the preceding claims, comprising providing a blade assembly mounted on a drive shaft extending into a volume co-operatively defined by the wall and the floor.

12. A method as claimed in claim 11, wherein the blade assembly comprises a hub configured to rotate in use about an axis of rotation, and a plurality of blades extending away from the hub, wherein at least two angles about the axis of rotation separating the blades differ.

13. A method as claimed in claim 11 or 12, further comprising providing a tubular element shaped and configured to substantially surround the drive shaft along that part of its length within the volume.

14. A method as claimed in claim 11, 12 or 13, wherein manufacturing the blade assembly comprises the steps of: d) providing a sheet of metal material, and e) cutting or punching a blade assembly having three blades from the sheet, one of the blades being longer than the other two, wherein, during the step of cutting or punching, a width/length ratio of the blades is varied to balance them at a predetermined centre of rotation of the blade assembly.

15. A method as claimed in any preceding claim, comprising providing an attachment formation configured to permit removable attachment of the bell to a motor unit.
